(19) Europäisches Patentamt
European Patent Office
Office européen des brevets

(11) **EP 1 249 022 B1**

(12) **EUROPEAN PATENT SPECIFICATION**

(45) Date of publication and mention
of the grant of the patent:
**26.10.2005 Bulletin 2005/43**

(21) Application number: **00985464.7**

(22) Date of filing: **05.12.2000**

(51) Int Cl.⁷: **G21C 3/62**

(86) International application number:
**PCT/GB2000/004641**

(87) International publication number:
**WO 2001/043142 (14.06.2001 Gazette 2001/24)**

(54) **PROCESS FOR MAKING NUCLEAR FUEL**

VERFAHREN ZUR HERSTELLUNG VON KERNBRENNSTOFF

PROCEDE DE PRODUCTION D'UN COMBUSTIBLE NUCLEAIRE

(84) Designated Contracting States:
**AT BE CH CY DE DK ES FI FR GB GR IE IT LI LU MC NL PT SE TR**

(30) Priority: **11.12.1999 GB 9929251**

(43) Date of publication of application:
**16.10.2002 Bulletin 2002/42**

(73) Proprietor: **British Nuclear Fuels PLC**
**Warrington, Cheshire WA3 6AS (GB)**

(72) Inventors:
• **MANGHAM, Gary**
**Salwick, Preston, Lancashire PR4 0XJ (GB)**
• **FARRANT, David Robert**
**Salwick, Preston, Lancashire PR4 0XJ (GB)**
• **ROBBINS, Chris**
**Salwick, Preston, Lancashire PR4 0XJ (GB)**

(74) Representative: **Pawlyn, Anthony Neil**
**Urquhart-Dykes & Lord LLP**
**Tower North Central**
**Merrion Way**
**Leeds LS2 8PA (GB)**

(56) References cited:
**EP-A- 0 760 519**

• **H. BAILLY ET AL. : "The NUCLEAR FUEL of PRESSURIZED WATER REACTORS and FAST REACTORS design and behaviour " July 1999 (1999-07) , LAVOISIER PUBLISHING , PARIS FRANCE XP002177564 240070 Chapter 1: (author H.Bailly) FUEL AND FUEL STUDIES, Part III OUTLINE OF PRESSURIZED WATER REACTOR AND FAST NEUTRON REACTOR FUELS (pages 26-36) Chapter 5: (authors: A.Berther et al.) PRESSURIZED WATER REACTOR FUEL ASSEMBLY, Part I: DESCRIPTION OF FUEL ASSEMBLY (pages 275-295) page 34 page 291**

**Description**

This invention concerns improvements in and relating to nuclear fuel and its manufacture, with particular emphasis on mixed oxide fuels.

Reprocessing to provide a fuel source has many benefits in obtaining useful fuel from material which has already been through the fuel cycle. Whereas the reactivity of $UO_2$ fuel is determined by the level of fissile $^{235}U$ present in the enrichment, the reactivity of reprocessed fuel is far more variable. Different isotopes and different elements present in the fuel make varying positive and negative contributions to the reactivity. Accounting for these variables, whilst achieving the desired reactivity in the fuel has proved a complex task.

Prior art attempts to account for the variation have presented fuel rods in which the level of enrichment is varied between fuel made from different batches to give the desired reactivity. This leads to a difficult and highly specific set of fuel production conditions for each starting batch and is only suitable for raw fuel materials falling close to the desired isotopic composition.

The present invention aims to provide a method of fuel manufacture which amongst other aims, is simpler to produce, requires a lower inventory of fuel batches to be kept, offers greater versatility and leads to less waste of materials.

According to a first aspect of the invention we provide a method for producing nuclear fuel, the method comprising:-

i) defining one or more reference composition for fuel to be produced;
ii) providing two or more amounts of plutonium oxide containing feed fuel material from which to produce the fuel;
iii) defining the deviation of each of the amounts of feed fuel material from a reference composition;
iv) selecting and mixing masses of feed fuel material from two or more of the amounts of feed fuel material, the masses being selected to give a lower deviation between the mixed feed fuel material and the selected reference composition than between the feed fuel material amounts and the selected reference composition, the deviation being defined by a function based on the isotopic composition of the feed fuel material amounts.

Preferably the nuclear fuel contains mixed oxides. The fuel preferably contains $UO_2$ and $PuO_2$. The fuel may contain levels of $^{239}Pu$ and/or $^{241}Pu$ of between 0.001 and 15%, and preferably between 0.001 and 10% of the total heavy metal content of the fuel.

The reference composition may be defined in terms of one or more of a lifetime average reactivity and/or in terms of a within-assembly power peaking factor and/or plutonium content and/or fissile plutonium content and/or $UO_2$ content and/or fissile $UO_2$ content.

Preferably the reference composition is, at least in part, defined in terms of a proportion and/or level of one or more isotopes of the fuel. The isotopes may include one or more, and preferably all of, $^{235}U$, $^{238}Pu$, $^{239}Pu$, $^{240}Pu$, $^{241}Pu$, $^{242}Pu$ and $^{241}Am$. Preferably the reference is defined, at least in part, in terms of the proportions and/or levels of $^{235}U$, $^{239}Pu$ and $^{241}Pu$. Ideally the reference is defined, at least in part, in terms of the proportions and/or levels of all of $^{235}U$, $^{238}Pu$, $^{239}Pu$, $^{240}Pu$, $^{241}Pu$, $^{242}Pu$ and $^{241}Am$.

The method may include the production of nuclear fuel according to a plurality of reference compositions. The fuel may, for instance, be provided according to a plurality of reference enrichments and/or reference compositions.

The deviation of an amount may be defined in terms of a lifetime average reactivity and/or in terms of a within-assembly power peaking factor and/or plutonium content and/or fissile plutonium content and/or $UO_2$ content and/or fissile $UO_2$ content relative to the reference composition.

Preferably the deviation of an amount is defined, at least in part, in terms of a proportion and/or level of one or more isotopes of the fuel relative to the reference composition. Preferably the isotopes include one or more of $^{235}U$, $^{238}Pu$, $^{239}Pu$, $^{240}Pu$, $^{241}Pu$, $^{242}Pu$ and $^{241}Am$. Preferably the deviation is defined, at least in part, in terms of the proportions and/or levels of $^{235}U$, $^{239}Pu$ and $^{241}Pu$ relative to the reference composition. Ideally the deviation is defined, at least in part, in terms of the proportions and/or levels of all of $^{235}U$, $^{238}Pu$, $^{239}Pu$, $^{240}Pu$, $^{241}Pu$, $^{242}Pu$ and $^{241}Am$ relative to the reference composition.

Preferably the deviation is a function of the sum of the differences between the composition of the feed fuel amount and the reference composition for each of the specified isotopes.

Preferably the deviation reflects whether isotopes contribute to the fission and/or absorb neutrons.

Preferably the deviation is a function of the sum of the differences between the composition of the feed fuel amount and the reference composition for each of the specified isotopes, the differences being added or subtracted depending on whether isotopes contribute to the fission and/or absorb neutrons.

Ideally the deviation is a function of the difference between the composition of the feed fuel amount and the reference composition for an isotope, multiplied by a weighting of the relative effect of that isotope, summed for each of the specified isotopes, the differences being added or subtracted depending on whether isotopes contribute to the fission and/or absorb neutrons.

The deviation may be determined by the function : -

$$E = \frac{\varepsilon \Sigma \alpha_i \eta_i + (100-\varepsilon)\beta_{235}\eta_{235}}{100}$$

where

$\varepsilon$ = Pu concentration in the MOX fuel (%)
$\alpha_i$ = % of Pu isotope 1 in the Pu vector
$\eta_i$ = EFMC coefficient of the Pu isotope i
$\beta_{235}$ = % of U235 isotope in the uranium carrier
$\eta_{235}$ = EFMC coefficient of U235
E = the required EFMC value of the MOX fuel to ensure energy equivalence

The function may be dependent on the reactor type for which the fuel is intended.

The amounts of the feed fuel material may be provided in batches. Batches may be defined as material obtained from a reprocessing method in which the material is substantially identical throughout. The identical nature may arise from the common origin of that material, for instance material extracted from a particular reactor core for reprocessing or from an equivalent enrichment process in the case of $UO_2$.

The batches may be sub-divided into cans. Cans may contain up to 9kg of plutonium oxide.

Preferably at least two feed fuel material amounts containing plutonium oxide are provided. One or more of the plutonium oxide feeds may be a MOX powder feed. Preferably at least one feed fuel material containing $UO_2$ is provided.

Preferably more than two amounts of plutonium feed fuel material are provided. At least four and more preferably at least six feed fuel amounts may be provided.

Preferably a plurality of amounts with plutonium contents above and below the reference composition plutonium content are provided. Preferably an amount either high or low, and ideally one high and low, for each of the plurality of the isotopes under consideration are provided. The isotopes under consideration may be $^{239}Pu$ and $^{241}Pu$ and ideally be all of $^{238}Pu$, $^{239}Pu$, $^{240}Pu$, $^{241}Pu$, $^{242}Pu$ and $^{241}Am$.

The number of amounts/batches available for selection at anytime may be restricted. The number may be restricted to less than 10 or even less than 4.

Amounts may be selected to minimise or eliminate the deviation between the reference composition and the resulting mixed fuel in terms of the analysed function.

Alternatively or additionally amounts may be selected to minimise the number of amounts only part used. Thus selection to use up part used amounts/batches/cans may be employed.

Amounts may be selected, alternatively or additionally, to produce mixed fuel which has an isotopic level, for one or more selected constituent isotopes, close to the isotopic level, for those one or more constituents, of mixed fuel produced from selection from other amounts. The sources of the fuel, i.e. batches, may be selected to give fuel which is matched closely, in terms of its isotopic level, to fuel produced from one or more other sources/batches. The isotopes may include $^{239}Pu$, $^{240}Pu$ and $^{241}Pu$, and more preferably include $^{238}Pu$, $^{239}Pu$, $^{240}Pu$, $^{241}Pu$, $^{242}Pu$ and $^{241}Am$.

The masses selected may be such that the deviation from the reference composition for an amount(s), in one direction, multiplied by the mass of that amount(s) approximates to, and ideally equates to, the deviation from the reference composition for the other amount(s), in the other direction, multiplied by the mass of that amount(s). Preferably a weighted average is used in determining the masses to be mixed.

More than two amounts containing plutonium may be mixed to achieve the desired balance.

The process may be used to reduce the deviation of the mixed fuel material from the reference composition but is preferably used to at least substantially eliminate it.

Preferably the two or more amounts are intimately mixed. Preferably the two or more mounts are mixed to give a homogeneous material.

The selection may be made additionally to provide mixed fuel material of substantially consistent enrichment. The selection may, however, be allowed to additionally provide mixed fuel of varying enrichments. In this way the reactivity equivalence and other factors may be made yet more consistent between the produced material and the reference composition.

The mixed fuel material may be further processed to produce fuel pellets. The further processing may introduce additives, such as neutron poisons, additives to assist in the pelletising process and the like. The further processing may include pelletising.

The pellets may be assembled into fuel rods. One or more different enrichments may be provided. Some or all of the enrichments may be provided according to the technique detailed herein. The fuel rods may be assembled into a fuel assembly. The fuel assembly may be introduced to a nuclear reactor core. The fuel assembly may be irradiated and extracted from a reactor core and subjected to reprocessing.

Various embodiments of the invention will now be described, by way of example only, and with reference to the accompanying drawings, in which :-

Figure 1 illustrates the variation of $^{241}$Am with time in reprocessed fuel;
Figure 2 illustrates the variation in reactivity with time of two MOX fuel assemblies having different isotopic make ups;
Figure 3 illustrates schematically the range of plutonium level variations which can be accommodated using prior art methods;
Figure 4 represents the arrangements of different fuel enrichment zones within a MOX fuel assembly;
Figure 5 illustrates, schematically, the process of one embodiment of the present invention.

Mixed oxide fuel materials are finding increasing use in the nuclear industry and are produced from the reprocessing of fuel materials which have passed through one or more reactor cycles. Mixed oxides are presently used in a variety of LWR's, including PWR and BWR, and are likely to be used on an increasing scale in other reactor types, including AGR.

Unlike $UO_2$ fuel materials, prior to reactor exposure, for which the reactivity is determined by the enrichment level of the $^{235}$U content, the reactivity for MOX fuels is far more complex.

MOX fuels contain a variety of different isotopes and elements in a variety of proportions. Some, such as $^{239}$Pu and $^{241}$Pu, contribute significantly to the fission process. Others, such as $^{241}$Am, act as parasitic neutron absorbers. In determining the reactivity of fuel the contributions of each of these components dependent on their effect and extent of that effect due to their level must be taken into account.

The environmental source of a material can have an effect on the components present. Some typical levels for number isotopes/elements from a variety of different source reactors are set out in Table 1.

TABLE 1

| REACTOR | MAGNOX | AGR | PWR | BWR |
|---|---|---|---|---|
| $^{238}$Pu | 0.1 | 0.5 | 1.3 | 1.3 |
| $^{239}$Pu | 70.0 | 60.7 | 58.6 | 54.7 |
| $^{240}$Pu | 24.9 | 28.9 | 23.6 | 28.5 |
| $^{241}$Pu | 3.7 | 6.6 | 11.2 | 9.5 |
| $^{242}$Pu | 1.1 | 3.0 | 4.8 | 5.5 |
| $^{241}$Am | 0.2 | 0.3 | 0.5 | 0.5 |

The isotopic consideration is, however, in no way fixed for any given type of reactor as the product varies according to the fuel loading pattern, irradiation history, cycle duration, neutron spectra and a variety of other variables all of which effect the isotopic composition arising.

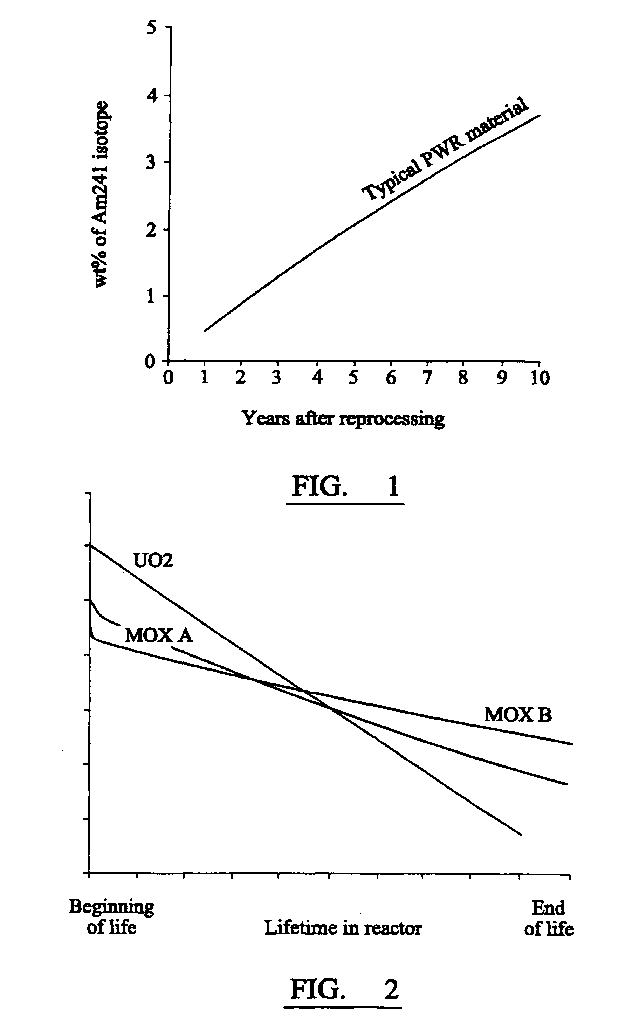

As illustrated in Figure 1 even for reprocessed material which starts out the same the isotopic profile varies with time. The increase of $^{241}$Am through decay of $^{241}$Pu is just one example of this.

The product of the fuel reprocessing stages is, therefore, a feed material to the fuel manufacturing process which is highly variable.

Variations in the isotopic compositions affect the manufacture of MOX fuel in two main ways. The lifetime average reactivity (LAR) varies depending on the levels of the different components, the duration of their existence during a reactor cycle and whether or not they contribute to or inhibit fission. The within-assembly power peaking factor is also significantly influenced by these components.

Figure 2 illustrates the variation of LAR for two equivalently enriched, but different isotopic composition MOX assemblies and a $UO_2$ assembly.

Attempts have been made to account for these variations by taking the isotopic analysis for a batch of reprocessed fuel and determining the variation in enrichment, about a reference level, which is necessary to give a desired equivalent reactivity for that batch. No blending between batches is used at all.

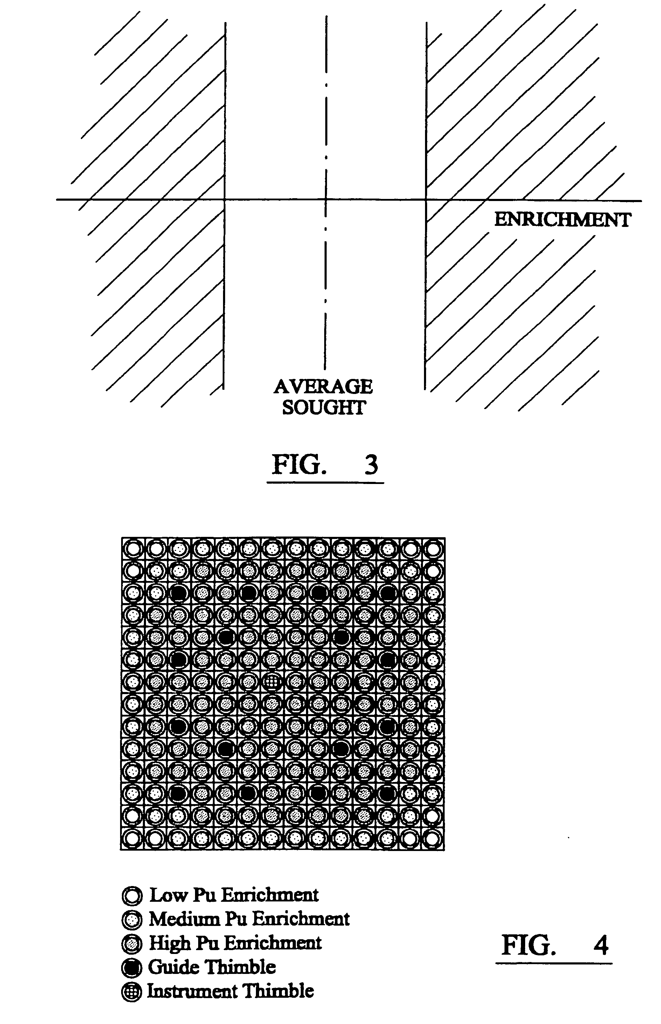

The results of these considerations are effective but they give rise to complexities in terms of the production route which must be used. The technique can in effect give rise to fuel assemblies in which large numbers of the rods are of quite different enrichments as they come from batches of fuel which are adjusted to be equivalent to the reference composition from a variety of initial points. The technique also imposes limitations on the range of starting materials which can be used and yet the variation overcome. Figure 3 schematically illustrates the range of materials which can be used; plutonium levels above and below certain limits cannot be used (shaded area).

The present invention represents a significant deviation from this technique of adjusting the enrichment. The present invention allows a constant enrichment to be produced from quite different sources of fuel by controlling the mixing of the feed fuel used to produce the fuel product, but additionally allows variations in the enrichment to be used where this variation gives further benefits in terms of reduced variation in the overall MOX performance for that fuel compared with others.

In a first embodiment a customer may present a requirement for MOX assemblies which match, in terms of their LAR existing $UO_2$ and MOX assemblies and which produce a given energy output. The method then involves as a first stage the determination of a reference composition which gives the desired reactivity and within assembly power peaking factors for that operator's request.

The calculations may include the provision of different enrichments for different zones within an assembly, i. e. the low, medium and high enrichment zones of Figure 4, with consequently a reference composition being determined for each zone.

The fuel is then produced to match this composition or compositions, neutronically, from the batches of reprocessed fuel available. Of course these batches will deviate significantly in almost all cases from the reference composition.

The reprocessed fuel inventory consists of a series of batches of fuel, the isotopic composition of which is determined. Each batch may be subdivided within the inventory into a number of cans of substantially identical material. Cans generally contain between 5-7kg of plutonium. Batches / cans in the inventory will exist which have a higher "quality" than the reference value and which have a lower "quality" than the reference value.

The variation of a can from the reference in question can be calculated using reactivity equivalence factors. The overall factor gives a variation in the plutonium concentration, relative to the reference, which is needed to achieve reactivity equivalence.

The factor may be determined by the general formula :-

$$\Delta = \Sigma\alpha\delta f$$

where $\delta f$'s represent the absolute perturbations in each of the individual isotopic fractions ($^{238}$Pu, $^{239}$Pu etc) relative to the reference set; $\alpha$ are a series of constants dependent on the reactor type/fuel assembly design; and $\Delta$ indicates how close the particular batch is to the reference.

The calculation will lead to a proposed enrichment increase for a lower quality fuel and a proposed enrichment decrease for a higher quality fuel. Rather than employ these enrichments, however, the technique generates a mass weighted average which gives a $\Delta$ of 0. Thus:-

$$W_1 \cdot \Delta_1 + W_2 \cdot \Delta_2 = 0$$

where W1 is the mass of the higher "quality" can and W2 is the mass of the lower "quality" can and $\Delta_1$, $\Delta_2$ are the respective deviation factors.

Based on the calculation of the weighted average these two masses can then be taken from the designated cans and combined with the appropriate level of $UO_2$ in a blending process to produce the desired fuel with the desired properties. The fuel produced is equivalent in terms of its reactivity to the reference composition and is also far nearer to it in terms of enrichment level than is likely in many cases with the prior art adjustment.

Whilst the above mentioned embodiment relates to blending to give enrichment consistent with the reference composition, other embodiments of the invention envisage allowing enrichment variation between the fuel produced and the reference composition so as to give better parity in relation to other properties of the fuel. Thus variations in the enrichment (which are in any event slight when compared with the variations necessary in the prior art techniques) are envisaged where this would give better reactivity equivalence and/or power peaking factors relative to the reference fuel composition. In allowing such variation in enrichment the invention also permits greater flexibility in the fuel batches which can be used to mix and give the desired product.

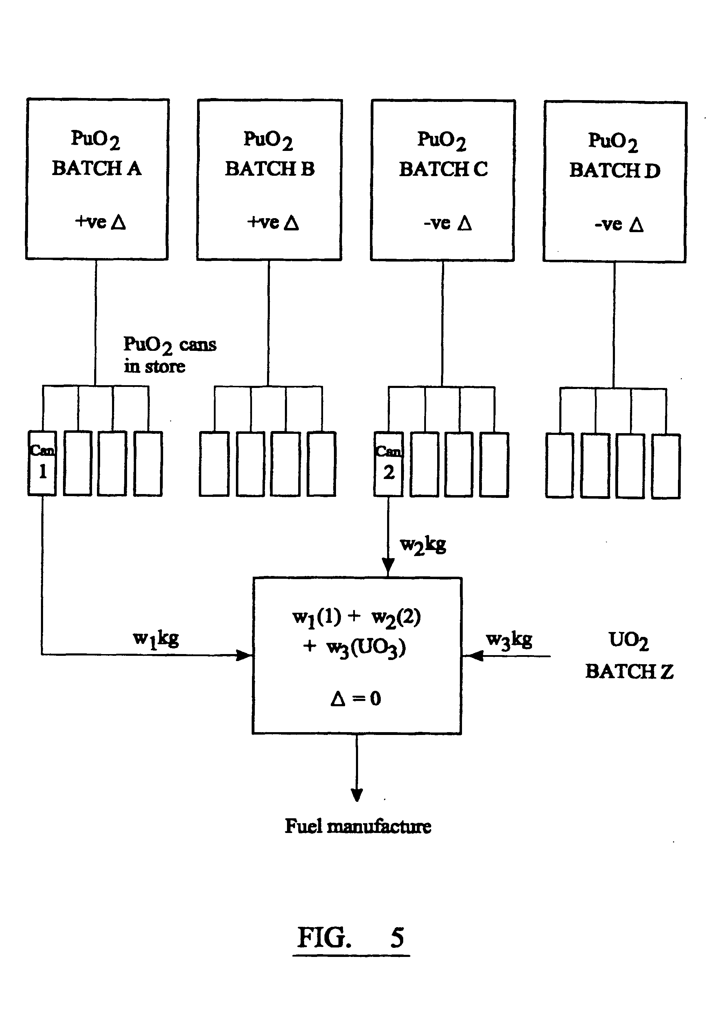

The basic process is illustrated in Figure 5 where 4 different batches A, B, C, D, of different plutonium levels and isotopic compositions are present in the inventory as a result of reprocessing. The inventory also includes a batch Z of $UO_2$.

According to the reactivity equivalence considerations discussed above each batch has a vector allocated to it based on its properties relative to the reference composition desired. Thus in this example batches A and B include plutonium compositions which due to their level and/or isotopic composition are above the desired reactivity and consequently have a positive vector. The other 2 batches C and D have negative vectors to reflect their lower "quality".

Based on the vectors of the batches and the reference composition desired a decision is made that $W_1$ of batch A should be taken from a can in that batch and combined with $W_2$ of batch C, again taken from a can, together with $W_3$ of the $UO_2$ of batch Z. These give an overall vector of zero and consequently a reactivity match to the reference composition for the blended fuel. The blended fuel is then fed to the forming processes of the subsequent fuel manufacture route.

Once blended the fuel passes through the usual processing and quality checking stages to generate pellets, still retaining the desired properties, which can be loaded into fuel rods and loaded into the appropriate position within a fuel assembly. Matching fuel rods are provided at positions of the same grade, with other enrichments being provided for the other zones according to the same principle of blending controlled by reactivity equivalence.

The process can be repeated for the other reference compositions where more than one enrichment is desired for a fuel assembly.

A specific example of an equivalence formula is given by:-

$$E = \frac{\varepsilon\Sigma\alpha_i\eta_i + (100\text{-}\varepsilon)\beta_{235}\eta_{235}}{100}$$

where

$\varepsilon$ = Pu concentration in the MOX fuel (%)
$\alpha_i$ = % of Pu isotope i in the Pu vector
$\eta_i$ = EFMC coefficient of the Pu isotope i
$\beta_{235}$ = % of U235 isotope in the uranium carrier
$\eta_{235}$ = EFMC coefficient of U235
E = the required EFMC value of the MOX fuel to ensure energy equivalence

For a BWR MOX fuel typical values of the constants in the equation are :-

| $\eta_{Pu238}$ | $\eta_{Pu239}$ | $\eta_{Pu240}$ | $\eta_{Pu241}$ | $\eta_{Pu242}$ | $\eta_{Am241}$ | $\eta_{235}$ | $\varepsilon$ | E |
|---|---|---|---|---|---|---|---|---|
| -0.80 | 1.00 | -0.50 | 1.30 | -0.80 | -2.00 | 1.00 | 7.00% | 4.06 |

Other values are readily available or calculable for other reactor types and fuel loads.

As can be seen the calculation takes into account the variation in $^{235}$U and this factor also has to be accommodated in terms of the variation between the actual $UO_2$ batch employed and the $^{235}$U content of the $UO_2$ reference.

Using the equivalence formula and constants stated above, and applying them to the following reference plutonium (plus $^{241}$Am and uranium carrier) a production regime can be determined.

| $^{238}$Pu | $^{239}$Pu | $^{240}$Pu | $^{241}$Pu | $^{242}$Pu | $^{241}$Am | $^{235}$U |
|---|---|---|---|---|---|---|
| 1.00% | 62.00% | 25.00% | 8.00% | 3.00% | 1.00% | 0.25% |

The fuel is to be produced from two Pu batches, A and B, and a uranium carrier batch, C. These are to be blended to produce MOX fuel which gives an equivalence reactivity to MOX fuel at 7% Pu concentration, with the above mentioned reference vector. The two batches, A and B, themselves have the following vectors.

| Batch | $^{238}$Pu | $^{239}$Pu | $^{240}$Pu | $^{241}$Pu | $^{242}$Pu | $^{241}$Am |
|---|---|---|---|---|---|---|
| A | 1.10% | 59.30% | 25.60% | 9.60% | 3.30% | 1.10% |
| B | 0.90% | 64.00% | 24.80% | 6.60% | 2.90% | 0.80% |

Assuming the carrier batch, C, consists of 0.225% 235U. The ratio by which the three batches would be blended according to the equivalence formula is

| Batch | Blending Ratio |
|-------|----------------|
| A | 0.0156 |
| B | 0.0544 |
| C | 0.9300 |
| **Total** | **1.0000** |

This blending would produce MOX fuel at 7% Pu concentration with the following Pu vector.

| $^{238}$Pu | $^{239}$Pu | $^{240}$Pu | $^{241}$Pu | $^{242}$Pu | $^{241}$Am | $^{235}$U |
|------|------|------|------|------|------|------|
| 0.94% | 62.95% | 24.98% | 7.27% | 2.99% | 0.87% | 0.225% |

This MOX fuel would be equivalent in terms of reactivity (as defined in the formula) to MOX fuel produced from the reference vector at 7% Pu concentration/enrichment.

The result of the calculation is the production of fuel material which is close to the desired Pu enrichment but which is also isotopically and neutronically fully balanced.

As the process represents a blending process in which lower "quality" and higher "quality" materials are mixed and hence averaged it also allows cans to be used in which the plutonium contents are outside of the permissible range of Figure 3, thus the shaded regions of non-suitable feeds are pushed back beyond the ranges usually encountered. As a consequence almost all batches arising from reprocessing operations can be used to produce MOX fuel so reducing waste.

The control management regime used in selecting the cans for the calculating system can be geared to minimise the number of cans undergoing processing by using up cans fully and avoid having cans left with small amounts of material left as a result.

As cans are used up in the blending process and as new cans come available from the reprocessing operation the inventory is continuously updated.

Whilst the schematic of Figure 5 illustrates 4 different isotopic batches from which the operator can select any two for blending, the provision of six feeds of plutonium, with the option to select from two up to all six of these as potential feed sources, offers the greatest control of each of the six plutonium isotopes present. Cans can be allocated to particular feed batches dependent on their similarity and/or the fact that they contain an above or below average level of a given isotope.

Once determined the technique allows fuel to be produced to the desired specification without continued reference by the fuel manufacturers to the fuel designers.

The blending process can be extended to include masses taken from three or even more cans if appropriate; a similar principle is applied to the calculation.

The benefits of application of the above approach is significant, but the benefits can be increased still further by accounting for fuel rod power peaking effects.

Fuel rod power peaking occurs as whilst all the assemblies will have equivalent reactivity the manner in which this is provided by the various components will vary between batches. Large differences in the isotopic vectors between adjoining fuel rods leads to larger instantaneous power peaking within that rod. This can have significant implications on clad and pellet temperatures, clad corrosion etc.

Power peaking problems in the present invention are alleviated by minimising the power peaking uncertainty factor $F_Q^E$ of MOX fuel by minimising isotopic deviations from the reference vector.

A number of benefits arise from tailoring the computer program controlling can selection further. The use of the cans can be scheduled, not only to match reactivity equivalence, but also to avoid substantial variations in the levels of the isotopes in the fuel. This ensures that fuel used to make rods does not have significant isotopic level variations and hence power peaking problems.

The technique offers many advantages over existing techniques including reduced plant requirements, simpler manufacturing and lower operator doses. The manner in which the blending is calculated and effected also allows a wider range of reprocessed batches to be employed, so reducing waste batches, whilst allowing manufacturers to progress the blending process without requiring updated calculations from fuel designers to accommodate the variations between batches.

**Claims**

1.  A method for producing nuclear fuel, the method comprising:-

    i) defining one or more reference composition for fuel to be produced;
    ii) providing two or more amounts of plutonium oxide containing feed fuel material from which to produce the fuel;
    iii) defining the deviation of each of the amounts of feed fuel material from a reference composition;
    iv) selecting and mixing masses of feed fuel material from two or more of the amounts of feed fuel material, the masses being selected to give a lower deviation between the mixed feed fuel material and the selected reference composition than between the feed fuel material amounts and the selected reference composition, the deviation being defined by a function based on the isotopic composition of the feed fuel material amounts.

2.  A method according to claim 1 in which the reference composition is defined in terms of one or more of a lifetime average reactivity and/or in terms of a within-assembly power peaking factor and/or plutonium content and/or fissile plutonium content and/or $UO_2$ content and/or fissile $UO_2$ content.

3.  A method according to claim 1 or claim 2 in which the reference composition is, at least in part, defined in terms of a proportion and/or level of one or more isotopes of the fuel.

4.  A method according to claim 3 in which tThe isotopes include all of $^{235}U$, $^{238}Pu$, $^{239}Pu$, $^{240}Pu$, $^{241}Pu$, $^{242}Pu$ and $^{241}Am$.

5.  A method according to any preceding claim in which the deviation of an amount is defined in terms of a lifetime average reactivity and/or in terms of a within-assembly power peaking factor and/or plutonium content and/or fissile plutonium content and/or $UO_2$ content and/or fissile $UO_2$ content relative to the reference composition.

6.  A method according to any preceding claim in which the deviation is a function of the sum of the differences between the composition of the feed fuel amount and the reference composition for each of the specified isotopes.

7.  A method according to any preceding claim in which the deviation is a function of the sum of the differences between the composition of the feed fuel amount and the reference composition for each of the specified isotopes, the differences being added or subtracted depending on whether isotopes contribute to the fission and/or absorb neutrons.

8.  A method according to any preceding claim in which the deviation is determined by the function :-

$$E = \frac{\varepsilon \Sigma \alpha_i \eta_i + (100\text{-}\varepsilon)\beta_{235}\eta_{235}}{100}$$

    where

    $\varepsilon$ = Pu concentration in the MOX fuel (%)
    $\alpha_i$ = % of Pu isotope i in the Pu vector
    $\eta_i$ = EFMC coefficient of the Pu isotope i
    $\beta_{235}$ = % of U235 isotope in the uranium carrier
    $\eta_{235}$ = EFMC coefficient of U235
    E = the required EFMC value of the MOX fuel to ensure energy equivalence

**Patentansprüche**

1.  Verfahren zur Herstellung von Kernbrennstoff, wobei das Verfahren umfasst:

    i) Bezeichnen einer oder mehrerer Bezugs-Zusammensetzungen von herzustellendem Brennstoff;

    ii) Bereitstellen zweier oder mehrerer Mengen von Plutoniumoxid enthaltendem Beschickungs-Brennstoffmaterial, aus welchem der Brennstoff hergestellt werden soll;

iii)Bestimmen der Abweichung jeder der Mengen von Beschikkungs-Brennstoffmaterial von einer Bezugs-Zusammensetzung;

iv) Auswählen und Vermischen von Mengen Beschickungs-Brennstoffmaterials aus zwei oder mehreren der Mengen von Beschickungs-Brennstoffmaterial, wobei die Mengen derart ausgewählt sind, daß sie zu einer geringeren Abweichung zwischen dem vermischten Beschikkungs-Brennstoffmaterial und der ausgewählten Bezugs-Zusammensetzung führen als zwischen den Mengen von Beschickungs-Brennstoffmaterial und der ausgewählten Bezugs-Zusammensetzung, wobei die Abweichung durch eine Funktion definiert wird, welche auf der Isotopen-Zusammensetzung der Mengen von Beschickungs-Brennstoffmaterial basiert.

2. Verfahren nach Anspruch 1, bei welchem die Bezugs-Zusammensetzung definiert ist bezogen auf eine oder mehrere Lebensdauer-Durchschnitts-Reaktivitäten und/oder bezogen auf einen In-Anordnungs-Leistungs-Formfaktor und/oder einen Plutonium-Anteil und/oder einen Anteil spaltbaren Plutoniums und/oder einen $UO_2$-Anteil und/oder einen Anteil von spaltbarem $UO_2$.

3. Verfahren nach Anspruch 1 oder 2, bei welchem die Bezugs-Zusammensetzung wenigstens teilweise definiert ist bezogen auf ein Verhältniss und/oder einen Pegel eines oder mehrerer Isotope des Brennstoffes.

4. Verfahren nach Anspruch 3, bei welchem die Isotope $^{235}$U, $^{238}$Pu, $^{239}$Pu, $^{240}$Pu, $^{241}$Pu, $^{242}$Pu und $^{241}$Am umfassen.

5. Verfahren nach einem der vorhergehenden Ansprüche, bei welchem die Abweichung einer Mengeneinheit definiert ist bezogen auf eine Lebensdauer-Durchschnitts-Reaktivität und/oder bezogen auf einen In-Anordnungs-Leistungs-Formfaktors und/oder einen Plutonium-Anteil und/oder ein Anteil spaltbaren Plutoniums und/oder einen $UO_2$-Anteil und/oder einen Anteil von spaltbarem $UO_2$ bezogen auf die Bezugs-Zusammensetzung.

6. Verfahren nach einem der vorhergehenden Ansprüche, bei welchem die Abweichung eine Funktion der Summe der Differenzen zwischen den Zusammensetzungen der Beschickungs-Brennstoffmenge und der Bezugs-Zusammensetzung für jedes der spezifizierten Isotope ist.

7. Verfahren nach einem der vorhergehenden Ansprüche, bei welchem die Abweichung eine Funktion der Summe der Differenzen zwischen den Zusammensetzungen der Beschickungs-Brennstoffmenge und der Bezugs-Zusammensetzung für jedes der spezifizierten Isotope ist, wobei die Differenzen abhängig davon addiert oder substrahiert werden, ob die Isotope zur Spaltung beitragen und/oder Neutronen absorbieren.

8. Verfahren nach einem der vorhergehenden Ansprüche, bei welchem die Abweichung durch folgende Funktion bestimmt wird:

$$E = \frac{\varepsilon\Sigma\alpha_i\eta_i + (100-\varepsilon)\beta_{235}\eta_{235}}{100}$$

mit

$\varepsilon$ = Pu-Konzentration im MOX-Brennstoff (%)
$\alpha_i$ = %-Anteil des Pu-Isotops i im Pu-Vektor
$\eta_i$ = EFMC-coefficient des Pu-Isotops i
$\beta_{235}$ = %-Anteil $^{235}$U-Isotop im Uran-Träger
$\eta_{235}$ = EFMC-coefficient von $^{235}$U
$E$ = zur Sicherstellung der Energie-Äquivalenz benötigter EFMC-Wert des MOX-Brennstoffes

**Revendications**

1. Procédé de production d'un combustible nucléaire, le procédé comprenant :

i) la définition d'une ou de plusieurs compositions de référence du combustible devant être produit ;

ii) la fourniture de deux ou de plusieurs quantités de matériau de combustible d'alimentation contenant d'oxyde de plutonium à partir duquel le combustible doit être produit;

iii) la définition de l'écart de chacune des quantités de matériau de combustible d'alimentation par rapport à une composition de référence ;

iv) la sélection et le mélange des masses de matériau de combustible d'alimentation à partir de deux ou plus des quantités de matériau de combustible d'alimentation, les masses étant sélectionnées afin de donner un écart plus faible entre le matériau de combustible d'alimentation mélangé et la composition de référence sélectionnée, qu'entre les quantités de matériau de combustible d'alimentation et la composition de référence sélectionnée, l'écart étant défini à l'aide d'une fonction basée sur la composition isotopique des quantités de matériau de combustible d'alimentation.

2. Procédé selon la revendication 1, dans lequel la composition de référence est définie en termes d'une réactivité, ou de plusieurs, de durée de vie moyenne, et/ou en termes de facteur de montée en puissance interne à l'assemblage, et/ou de contenu en plutonium, et/ou de contenu en plutonium fissile, et/ou de contenu en $UO_2$, et/ou de contenu en $UO_2$ fissile.

3. Procédé selon la revendication 1 ou la revendication 2, dans lequel la composition de référence est, au moins en partie, définie en termes de proportion et/ou de niveau d'un ou de plusieurs isotopes du combustible.

4. Procédé selon la revendication 3, dans lequel les isotopes comprennent l'ensemble d'$^{235}U$, $^{238}Pu$, $^{239}Pu$, $^{240}Pu$, $^{241}Pu$, $^{242}Pu$, et $^{241}Am$.

5. Procédé selon l'une quelconque des revendications précédentes, dans lequel l'écart d'une quantité est défini en termes de réactivité de durée de vie moyenne, et/ou en termes de facteur de montée en puissance interne à l'assemblage, et/ou de contenu en plutonium, et/ou de contenu en plutonium fissile, et/ou de contenu en $UO_2$, et/ou de contenu en $UO_2$ fissile, par rapport à la composition de référence.

6. Procédé selon l'une quelconque des revendications précédentes, dans lequel l'écart est fonction de la somme des différences entre la composition de la quantité de combustible d'alimentation et la composition de référence pour chacun des isotopes spécifiés.

7. Procédé selon l'une quelconque des revendications précédentes, dans lequel l'écart est fonction de la somme des différences entre la composition de la quantité de combustible d'alimentation et la composition de référence pour chacun des isotopes spécifiés, les différences étant ajoutées ou soustraites selon que les isotopes contribuent à la fission et/ou absorbent des neutrons.

8. Procédé selon l'une quelconque des revendications précédentes, dans lequel l'écart est déterminé à l'aide de la fonction :

$$E = \frac{\varepsilon \Sigma \alpha_i \eta_i + (100-\varepsilon)\beta_{235}\eta_{235}}{100}$$

où

$\varepsilon$ = concentration de Pu dans le combustible MOX (en %)

$\alpha_i$ = % de l'isotope i de Pu dans le vecteur Pu

$\eta_i$ = coefficient EFMC de l'isotope i de Pu

$\beta_{235}$ = % de l'isotope de $U^{235}$ dans l'entraîneur d'uranium

$\eta_{235}$ = coefficient EFMC de l'$U^{235}$

E = la valeur requise de l'EFMC du combustible MOX afin d'assurer l'équivalence d'énergie.

FIG. 1

FIG. 2

ENRICHMENT

AVERAGE
SOUGHT

FIG.   3

○ Low Pu Enrichment
◉ Medium Pu Enrichment
◉ High Pu Enrichment
● Guide Thimble
⊞ Instrument Thimble

FIG.   4

| PuO$_2$ BATCH A +ve Δ | PuO$_2$ BATCH B +ve Δ | PuO$_2$ BATCH C -ve Δ | PuO$_2$ BATCH D -ve Δ |

PuO$_2$ cans in store

Can 1          Can 2

w$_2$kg

w$_1$kg → | w$_1$(1) + w$_2$(2) + w$_3$(UO$_3$) Δ = 0 | ← w$_3$kg    UO$_2$ BATCH Z

Fuel manufacture

## FIG. 5